# EUROPÄISCHE PATENTSCHRIFT

(11) **EP 2 432 654 B1**
(45) Veröffentlichungstag und Bekanntmachung des Hinweises auf die Patenterteilung: **26.08.2015**
(21) Anmeldenummer: 10721714.3
(22) Anmeldetag: 19.05.2010
(51) Int. Cl.: B60J 5/02

(54) **PERSONENKRAFTWAGEN MIT FRONTTÜR**
PASSENGER CAR HAVING A FRONT DOOR
VÉHICULE AUTOMOBILE DE TRANSPORT DE PERSONNES AVEC PORTE FRONTALE

(30) Priorität: 20.05.2009 DE 202009007273 U
(43) Veröffentlichungstag der Anmeldung: 28.03.2012
(73) Patentinhaber: Luggenhölscher, Alfred, 45964 Gladbeck (DE)
(72) Erfinder: Luggenhölscher, Alfred, 45964 Gladbeck (DE)
(74) Vertreter: Lelgemann, Karl-Heinz
(86) Internationale Anmeldenummer: PCT/EP2010/003090
(87) Internationale Veröffentlichungsnummer: WO 2010/133361

(56) Entgegenhaltungen:
- WO-A1-02/18163
- FR-A- 1 506 602
- JP-A- 2009 078 740
- US-A- 4 620 743

## Beschreibung

Die Erfindung bezieht sich auf einen Kraftwagen mit einer Fahrgastzelle.

Bei bekannten Kraftwagen treten beim Ein- und Aussteigen bei beengten räumlichen Verhältnissen häufig Probleme auf, da ein Öffnen der die Einstieg- und Ausstiegöffnungen schließenden Türen oft nur in einem beschränkten Ausmaß möglich ist. Um dies bei der Auslegung von Park- bzw. Abstellflächen zu berücksichtigen, müssen diese Flächen ein entsprechend großes Raumangebot bieten. Darüber hinaus werden durch das Öffnen der Seitentüren insbesondere in unübersichtlichen Verkehrssituationen oft Gefahren verursacht, die zu Beeinträchtigungen anderer Verkehrsteilnehmer, insbesondere Fahrradfahrer, führen und teilweise sogar Unfälle zur Folge haben können.

Ausgehend von dem vorstehend geschilderten Stand der Technik liegt der Erfindung die Aufgabe zugrunde, einen Kraftwagen mit einer Fahrgastzelle zu schaffen, bei dem die vorstehend erwähnten Nachteile reduziert sind bzw. nicht mehr auftreten und bei dem darüber hinaus die Sicherheit der Fahrzeuginsassen in einem hohen Ausmaß gewährleistet werden kann.

Das Dokument FR 1 506 602 offenbart den nächstliegenden Stand der Technik. Diese Aufgabe wird erfindungsgemäß dadurch gelöst, dass die Fronttür über eine Oberkante einer Frontöffnung der Fahrgastzelle in rückwärtiger Richtung aus der Frontöffnung heraus verschieblich ist. Die Frontöffnung der Fahrgastzelle ist von einem steifen Sicherheitsrahmen gebildet und die Fahrgastzelle ist als Sicherheitszelle ausgebildet, zu der die Fronttür als Bestandteil gehört.

Erfindungsgemäß weist der Kraftwagen bzw. dessen Fährgastzelle keine Seitentüren auf, die in geöffnetem Zustand seitlich aus dem Fahrzeug vorstehen und daher für insbesondere von der hinteren Seite des Fahrzeugs her sich bewegende Fahrradfahrer etc. einen Gefahrpunkt bilden können. Darüber hinaus können durch die türfreie Ausgestaltung die Seitenteile der Fahrgastzelle des erfindungsgemäßen Kraftwagens besonders stabil und widerstandsfähig ausgebildet werden. Das Ein- und Aussteigen aus der Fahrgastzelle ist in einfacher Weise möglich. Da die Frontöffnung der Fahrgastzelle von einem steifen Sicherheitsrahmen gebildet ist und die Fahrgastzelle als Sicherheitszelle ausgebildet ist, zu der die Fronttür als Bestandteil gehört, kann die Sicherheit in der Fahrgastzelle befindlicher Personen in einem hohen Ausmaß gewährleistet werden.

Für die Bodengruppe des erfindungsgemäßen Kraftwagens kann als Werkstoff ein Schaummaterial eingesetzt werden, wobei die Kunststoffe zu dessen Herstellung aus Recyclingmaterial stammen können. So läßt sich eine optimale Leichtbaustruktur hierfür erreichen, deren hohe Eigenstabilität darauf beruht, dass sich die Optimalwinkel einer Wabenstruktur vor Aushärtung selbständig aufgebaut haben. Alternativ kann als Werkstoff ein Gitter aus Kunststoff und/oder Aluminium erstellt werden, wobei die Ausfüllung der aufgrund der Wabenstruktur vorliegenden Wabenkammern mit Schaum realisiert wird, der aushärtet. Die Tragkraft kann im Falle einer mehrlagig kreuzenden Gitterausführung erhöht werden.

Die Sicherheitszelle kann als Sicherheitskäfig aus den vorstehend in Verbindung mit der Bodengruppe geschilderten Werkstoffen hergestellt sein. Die aufragenden Bestandteile des Sicherheitskäfigs müssen im Gegensatz zur Bodengruppe auch waagerechten Kräften, wie Winddruckwiderstand, ggf. auch einem Aufprall, widerstehen. Daher ergibt sich für diese Bestandteile des Sicherheitskäfigs die Notwendigkeit einer besonders formfesten, aber auch puffernden, formwiederherstellenden Funktion. Die entsprechenden Außenbauteile des Sicherheitskäfigs sollten eigenständig in Ruhe ihre Ursprungsform wieder einnehmen können, um so lokalen Verformungen zu widerstehen. Als Prinzip kann daher eine zweilagige Membran mit eingelagerter Dämpfungszone vorgesehen werden. Als Werkstoffe hierfür sind ebenfalls Kunststoffe denkbar. Die Verarbeitung kann im sog. Sandwich-Verfahren erfolgen, wobei für die Stabilität die beiden außen und für die Dämpfung die Innenschicht verantwortlich sein können. Je nach Aufbaustärke der Dämpfungsschicht erhöht sich der Kraftwiderständ.

Der Oberkante der Fronttür ist erfindungsgemäß eine Schwenkachse zugeordnet , die mit der Fronttür aus der Frontöffnung der Fahrgastzelle herausschiebbar ist, bevor die Fronttür aus der Frontöffnung der Fahrgastzelle um diese Schwenkachse verschwenkbar ist. Der für das Öffnen bzw. Schließen der Fronttür erforderliche Platzbedarf wird damit weiter reduziert. Dies hat entsprechende Auswirkungen auf den Flächenbedarf von Parkplätzen, Fahrgassen, Stellplatzbereichen, Parkhäusern, Tiefgaragen, Garagen sowie auf die Kapazität von Fahrzeuge transportierenden Geräten, wie LKW, Eisenbahnen, Autoreisezügen, Schiffen etc.

Die Schwenkachse der Fronttür ist im Bereich der Oberkante angeordnet. Nach dem Aufschwenken der Fronttür kann die Fahrgastzelle dann einfach durch eine vorwärtige Bewegung verlassen bzw. durch eine nach rückwärts gerichtete Bewegung betreten werden.

Alternativ ist es grundsätzlich möglich, eine Schwenkachse der Fronttür im Bereich der Unterkante derselben anzuordnen. Das Betreten bzw. Verlassen der Fahrgastzelle muss dann schräg zur Längsachse des Kraftwagens erfolgen.

Um mit einem vergleichsweise geringen technisch-konstruktiven Aufwand ein Aufschieben bzw. Zuschieben der Fronttür möglich zu machen, ist es vorteilhaft, wenn die Fahrgastzelle des Kraftwagens im Längsschnitt einen teilkreisförmigen Querschnitt aufweist.

Die Lenkvorrichtung des erfindungsgemäßen Kraftwagens kann als herkömmliches Lenkrad oder Joystick ausgebildet sein.

Die Lenkvorrichtung des erfindungsgemäßen Kraftwagens ist zweckmäßigerweise an ein Seitenteil der Fahrgastzelle oder an ein zwischen den Vordersitzen der Fahrgastzelle angeordnetes Anschlußteil angeschlossen.

Vorteilhaft kann die Fronttür eine integrierte Knautschzone aufweisen.

Selbstverständlich ist es möglich, daß die Fronttür zweigeteilt ist. Grundsätzlich besteht auch die Möglichkeit, die Fronttür in mehr als zwei Teile aufzuteilen. So kann jedem der ggf. mehreren Vordersitze ein Fronttürteil zugeordnet werden.

Darüber hinaus sollte jedes Fronttürteil separat auf- und zuschwenkbar bzw. verschieblich sein, so daß immer nur das gerade benötigte Fronttürteil geöffnet und geschlossen werden muß.

Die Fronttür des Kraftwagens kann bzw. die Fronttürteile desselben können in zwei über- bzw. untereinander angeordnete, voneinänder separate Fronttürsegmente aufgeteilt sein, die separat um zwei zueinander parallele Schwenkachsen verschwenkbar sind. Hierdurch kann der Platzbedarf beim Öffnen der Fronttür erheblich reduziert werden.

Bei diesem Kraftwagen ist eine Schwenkachse an der Oberkante der Frontöffnung und die andere Schwenkachse an der Unterkante der Frontöffnung angeordnet.

Alternativ ist es möglich, daß eine Schwenkachse an der Oberkante der Frontöffnung und die andere Schwenkachse an der Unterkante des oberen Fronttürsegments angeordnet ist. Je nach Anforderungsprofil kann die gewünschte Gestaltung der Fronttür gewählt werden.

Die Länge und damit der Achsabstand und die Breite und damit der Radabstand des erfindungsgemäßen Kraftwagens sind variabel gestaltbar. Der erfindungsgemäße Kraftwagen kann entsprechend modulartig zusammengestellt werden, wobei eine Ausgestaltung als Ein-, Zwei-, Fünf-, Sieben-, Neunsitzer, Minivan, Lieferwagen, Minibus od.dgl. ohne weiteres realisierbar ist. Hierbei ergibt sich eine besonders schmale, u.U. fußgängerzonentaugliche Ausführungsform, wenn der erfindungsgemäße Kraftwagen als Einsitzer bzw. mit in Fahrtrichtung hintereinander angeordneten Sitzen ausgebildet ist.

Die Innenseite des unteren Fronttürsegments kann eben bzw. planar ausgebildet sein, so dass sie mittels eines Rollstuhls od.dgl. befahrbar ist.

Selbstverständlich ist es möglich, dass auch die Hecktür des erfindungsgemäßen Kraftwagens in der vorstehend beschriebenen Weise ausgebildet ist, wobei dann auch der Heckbereich des erfindungsgemäßen Kraftwagens dem Aufenthalt bzw. Transport von Personen dienen kann.

Bei der einen Bestandteil der Sicherheitszelle bildenden Fronttür ist es vorteilhaft, wenn in diese eine Knautschzone integriert ist, die im unteren Abschnitt der Fronttür angeordnet und als Wabenstruktur ausgebildet ist.

Da im Falle des erfindungsgemäßen Kraftwagens keine Seitentüren vorgesehen sind, ist es vorteilhaft und mit einem vergleichsweise geringen technisch-konstruktiven Aufwand realisierbar, dass die in Längsrichtung der seitentürfreien Fahrgastzelle sich erstreckenden Seitenteile der Fahrgastzelle verstärkt, vorzugsweise mittels Wabenstrukturen, ausgebildet werden.

Für den kompakten Aufbau des erfindungsgemäßen Kraftwagens und für günstige Schwerpunkteigenschaften desselben ist es vorteilhaft, wenn eine Motorgruppe des Kraftwagens - in Längsrichtung desselben - etwa mittig am Bodenbereich der Fahrgastzelle angeordnet ist.
Zweckmäßigerweise ist der erfindungsgemäße Kraftwagen mit einer Hecktür ausgerüstet, die in Bezug auf eine in Querrichtung des Kraftwagens angeordnete Mittelebene der Fahrgastzelle symmetrisch zur Fronttür angeordnet ist und über eine Oberkante einer Hecköffnung der Fahrgastzelle in vorwärtiger Richtung aus der Hecköffnung heraus verschieblich ist.

Um den an moderne Fahrgastzellen gestellten Sicherheitsanforderungen noch besser zu genügen, ist es zweckmäßig, wenn oberhalb einer in Längsrichtung der Fahrgastzelle etwa mittig angeordneten Motorgruppe des Kraftwagens in der Fahrgastzelle ein Querträger angeordnet ist, der in die als Sicherheitszelle gebildete Fahrgastzelle integriert ist.

Die Sicherheitszelle ausbildende Bauteile der Fahrgastzelle können im Querschnitt vorteilhaft eine Wabenstruktur aufweisen, die zweckmäßigerweise in Leichtbauweise ausgestaltet sein kann.

Gemäß einer weiteren vorteilhaften Ausführungsform des erfindungsgemäßen Kraftwagens sind die die Sicherheitszelle ausbildenden Bauteile der Fahrgastzelle aus geeigneten Leichtwerkstoffen, z.B. aus Aluminium, Kunststoff od.dgl., hergestellt, insbesondere gegossen.

Die Außenhaut des erfindungsgemäßen Kraftwagens kann vorteilhaft nach den Prinzipien des "Lotoseffekts" ausgebildet sein, d.h. mit einer Nanostruktur beschichtet sein. Hierdurch werden der Luftwiderstand und der Treibstoffverbrauch reduziert, wobei die Oberfläche der Außenhaut darüber hinaus selbstreinigend ist.

Im Folgenden wird die Erfindung anhand von Ausführungsbeispielen unter Bezugnahme auf die Zeichnung näher erläutert.

Es zeigen:
- Figur 1: eine Prinzipdarstellung einer ersten Ausführungsform eines erfindungsgemäßen Kraftwagens;
- Figur 2: eine Prinzipdarstellung einer zweiten Ausführungsform des erfindungsgemäßen Kraftwagens;
- Figur 3: eine Prinzipdarstellung einer dritten Ausführungsform eines erfindungsgemäßen Kraftwagens;
- Figur 4: und
- Figur 5: eine Prinzipdarstellung einer vierten Ausführungsform eines erfindungsgemäßen Kraftwagens in Seitenansicht bzw. Draufsicht;
- Figur 6: eine Prinzipdarstellung einer fünften Ausführungsform eines erfindungsgemäßen Kraftwagens;
- Figur 7: eine perspektivische Vorderansicht einer sechsten Ausführungsform eines erfindungsgemäßen Kraftwagens;
- Figur 8: eine perspektivische, geschnittene Seitenansicht der in Figur 7 gezeigten sechsten Ausführungsform eines erfindungsgemäßen Kraftwagens;
- Figur 9: eine Prinzipdarstellung der in den Figuren 7 und 8 gezeigten sechsten Ausführungsform eines erfindungsgemäßen Kraftwagens in Seitenansicht; und
- Figur 10: eine Prinzipdarstellung der in den Figuren 7 bis 9 gezeigten sechsten Ausführungsform eines erfindungsgemäßen Kraftwagens im Querschnitt.

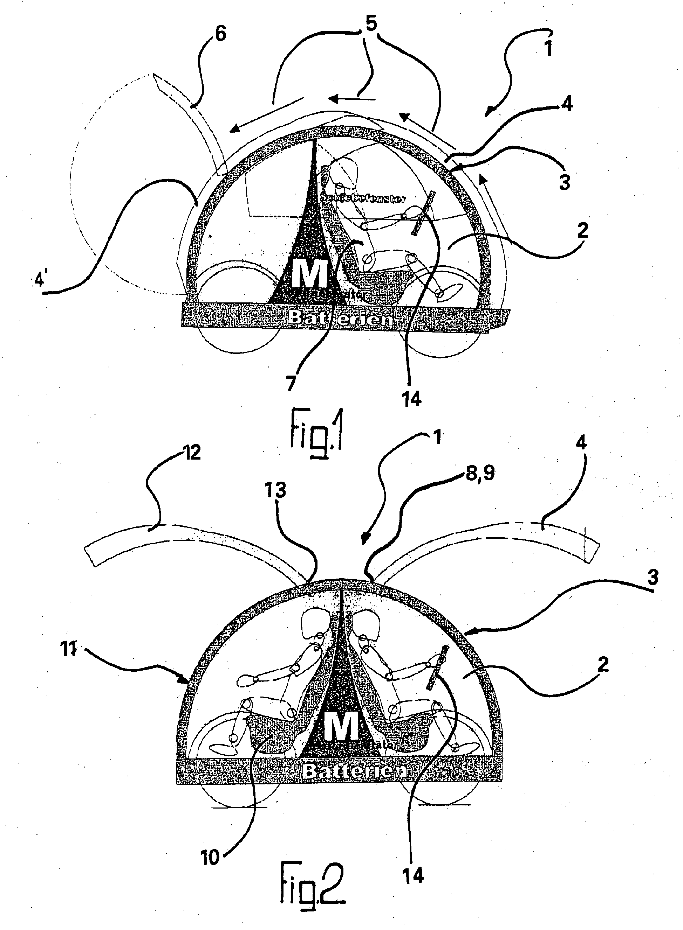

Eine in Figur 1 prinzipiell gezeigte erste Ausführungsform eines erfindungsgemäßen Kraftwagens 1 hat eine Fahrgastzelle 2, deren in der Figur nicht explizit dargestellten Seitenteile ohne Einstieg- oder Ausstiegöffnungen ausgebildet sind.

An der Frontseite 3 des Kraftwagens ist eine Fronttür 4 vorgesehen, mittels der eine in der Frontseite 3 vorgesehene Einstieg- bzw. Ausstiegöffnung geöffnet und geschlossen werden kann. Hierzu wird die Fronttür 4, wie durch die Pfeile 5 in Figur 1 gezeigt, über die Oberkante der Einstieg- bzw. Ausstiegöffnung hinweg in rückwärtiger Richtung der Fahrgastzelle 2 geschoben, bis sie diejenige Position einnimmt, die in Figur 1 durch das Bezugszeichen 4 angezeigt wird.

Das Öffnen der Fronttür 4 ist bei der in Figur. 1 gezeigten Ausführungsform nur möglich, wenn eine Heckklappe 6 des Kraftwagens 1 geschlossen ist.

In der geöffneten Position der Fronttür 4 ist die Einstieg- bzw. Ausstiegöffnung an der Frontseite 3 des Kraftwagens geöffnet. Eine Person 7 kann in die Fahrgastzelle 2 einsteigen bzw. aus der Fahrgastzelle 2 aussteigen.

Bei der in Figur 2 gezeigten Ausführungsform des erfindungsgemäßen Kraftwagens 1 ist im Unterschied zu der in Figur 1 gezeigten keine verschiebliche Anordnung der Fronttür 4 vorgesehen, sondern die Fronttür 4 ist um eine Schwenkachse 8 verschwenkbar, die im Bereich der Oberkante 9 der Ein- bzw. Ausstiegöffnung der Fahrgastzelle 2 angeordnet ist. Bei der in Figur 2 gezeigten Position der Fronttür 4 ist die Einbzw. Ausstiegöffnung geöffnet, so dass die Person 7 die Fahrgastzelle 2 verlassen bzw. in die Fahrgastzelle 2 eintreten kann.

Auch bei der in Figur 2 gezeigten Ausführungsform sind die Seitenteile der Fahrgastzelle 2 ohne Ein- bzw. Ausstiegöffnungen ausgebildet. Im Falle der beiden dargestellten Ausführungsformen hat die Fahrgastzelle im Längsschnitt einen etwa teilkreisförmigen Querschnitt, was insbesondere bei der in Figur 1 gezeigten Ausführungsform des Kraftwagens 1 von Bedeutung ist, da hierdurch die Verschiebung der Fronttür 4 erheblich einfacher technisch-konstruktiv ausgestaltet werden kann.

Bei der in Figur 2 gezeigten Ausführungsform ist die Fahrgastzelle 2 auch im rückwärtigen bzw. Heckbereich mit Fahrzeugsitzen 10 versehen, wobei auch die Heckseite 11 der Fahrgastzelle 2 mittels einer Hecktür 12 geöffnet und geschlossen werden kann, die ebenfalls um eine waagerechte Schwenkachse 13 verschwenkbar ist.

Eine im vorderen Bereich der Fahrgastzelle 2 vorgesehene Lenkvorrichtung 14 erstreckt sich von einem in den Figuren nicht gezeigten Seitenteil der Fahrgastzelle 2 her in ihre Betriebsposition. Die Lenkvorrichtung 14 kann klappbar oder in anderer Weise verstellbar vorgesehen sein.

Die Frontöffnung bzw. die Einstieg- und Ausstiegöffnung der Fahrgastzelle 2 wird jeweils von einem steifen Sicherheitsrahmen umgeben, der gemeinsam mit der Fronttür 4 Bestandteil der als Sicherheitszelle ausgebildeten Fahrgastzelle 2 ist.

Die Fronttür 4 kann mit integrierten Knautschzonen ausgebildet sein.

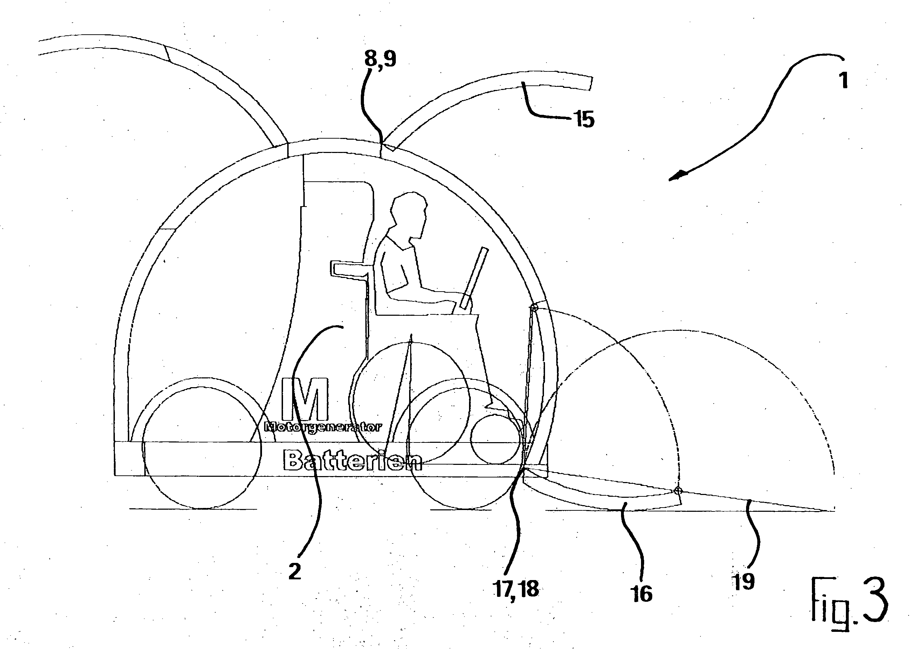

Im Falle der in Figur 3 gezeigten Ausführungsform des erfindungsgemäßen Kraftwagens 1 ist die Fronttür 4 aus einem oberen Fronttürsegment 15 und einem unteren Fronttürsegment 16 zusammengesetzt. Die Teilung der Fronttür 4 in das obere Fronttürsegment 15 und das untere Fronttürsegment 16 verläuft in einem mittleren Bereich der Fronttür 4.

Das obere Fronttürsegment 15 ist um die im Bereich der Obenkante 9 der Frontöffnung angeordnete Schwenkachse 8 schwenkbar.

Im Falle des in Figur 3 gezeigten Ausführungsbeispiels ist das untere Fronttürsegment 16 um eine Schwenkachse 17 schwenkbar, die im Bereich einer Unterkante 18 der Frontöffnung angeordnet ist.

Alternativ ist es möglich, diejenige Schwenkachse, um die das untere Fronttürsegment 16 schwenkbar ist, an einer Unterkante des oberen Fronttürsegments 15 vorzusehen.

Des Weiteren ist im Falle der Ausführungsform gemäß Figur 3 das untere Fronttürsegment 16 mit einem klappbaren Rampenelement 19 versehen, welches eine befahrbare Rampe zwischen dem Innenboden der Fahrgastzelle und einer Straßen- oder Parkfläche bilden kann. Eine solche Ausgestaltung des Kraftwagens 1 kann insbesondere für Behinderte bzw. Rollstuhlfahrer vorteilhaft sein.

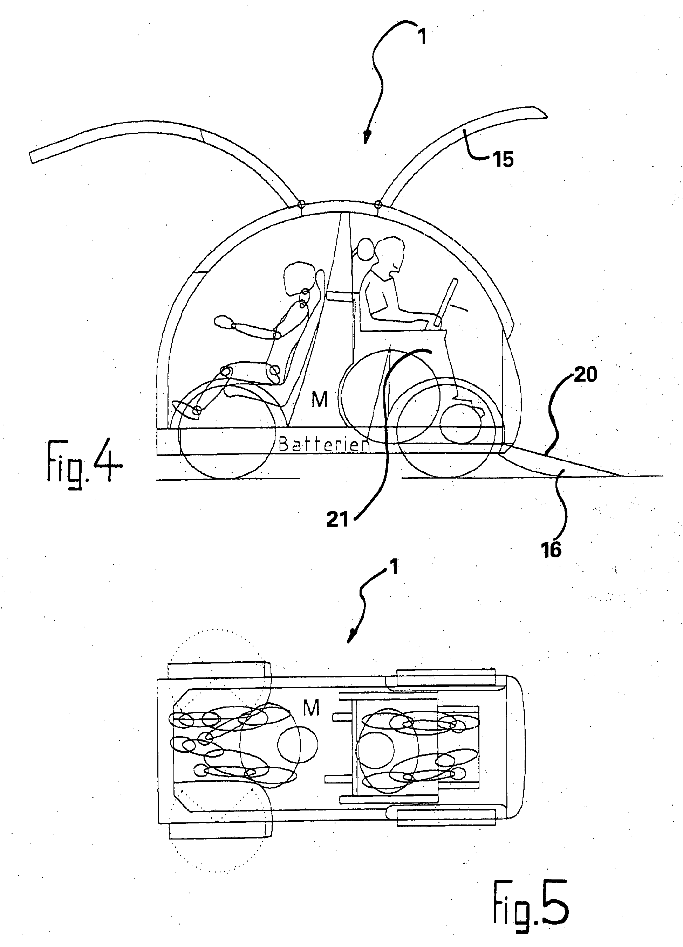

Im Falle der in den Figuren 4 und 5 gezeigten Ausführungsform des erfindungsgemäßen Kraftwagens sind zwei hintereinander angeordnete Sitze vorgesehen, wobei die Fronttür 4 in der anhand von Figur 3 bereits beschriebenen Weise mit einem oberen Fronttürsegment 15 und einem unteren Fronttürsegment 16 ausgestaltet ist.

Das untere Fronttürsegment 16 ist auf seiner Innenseite planar bzw. eben ausgestaltet, so dass es eine ebene Fläche 20 bildet, die nach dem Verschwenken des unteren Fronttürsegments 16 in die in Figur 4 gezeigte Stellung als Fahrfläche für einen Rollstuhl 21 od.dgl. genutzt werden kann.

Bei der in den Figuren 4 und 5 gezeigten Ausführungsform des Kraftwagens 1 sind sowohl der Frontbereich als auch der Heckbereich des Kraftwagens 1 lediglich für eine einzige Person gestaltet, so dass der Kraftwagen 1 in einer äußerst geringen Breite gestaltet werden kann. Hierdurch ist der Einsatz des derart ausgestalteten Kraftwagens 1 auch unter äußerst beengten Verhältnissen oder auch in Fußgängerzonen denkbar.

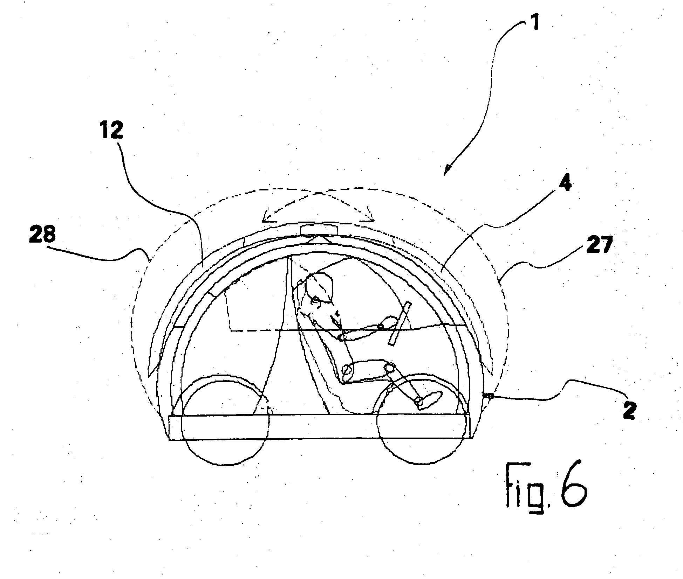

Bei der in Figur 6 gezeigten Ausführungsform des Kraftwagens 1 ist ersichtlich, dass sowohl die Fronttür 4 als auch die Hecktür 12 der Fahrgastzelle 2 des Kraftwagens 1 aus der Frontöffnung bzw. der Hecköffnung heraus in aufwärtiger Richtung vorschiebbar sind, wie dies für die Fronttür 4 durch den Pfeil 27 und für die Hecktür 12 durch den Pfeil 28 in Figur 6 gezeigt ist. Hierbei sind die Fronttür 4 und die Hecktür 12 in Bezug auf eine in Querrichtung des Kraftwagens 1 angeordnete Mittelebene der Fahrgastzelle 2 symmetrisch zueinander angeordnet. Teilweise kann die Fronttür 4 oder die Hecktür 12 aus der Front- bzw. Hecköffnung der Fahrgastzelle 2 in aufwärtiger Richtung herausgeschoben werden. Grundsätzlich sind auch Ausführungsformen möglich, bei denen die Fronttür 4 und die Hecktür 12 gleichzeitig in aufwärtiger Richtung aus der Front- bzw. der Hecköffnung herausgeschoben werden können.

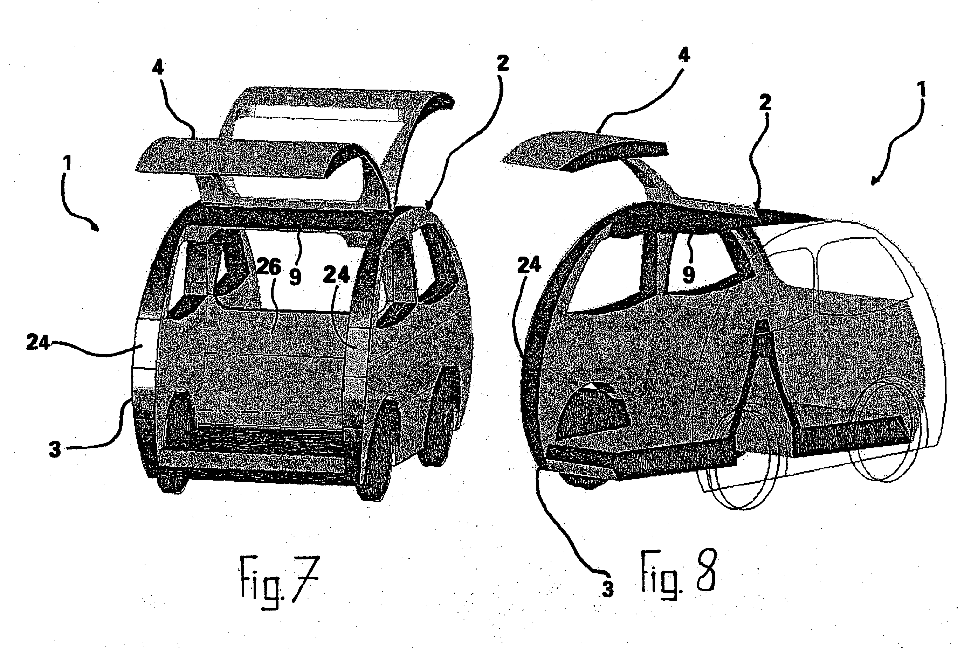

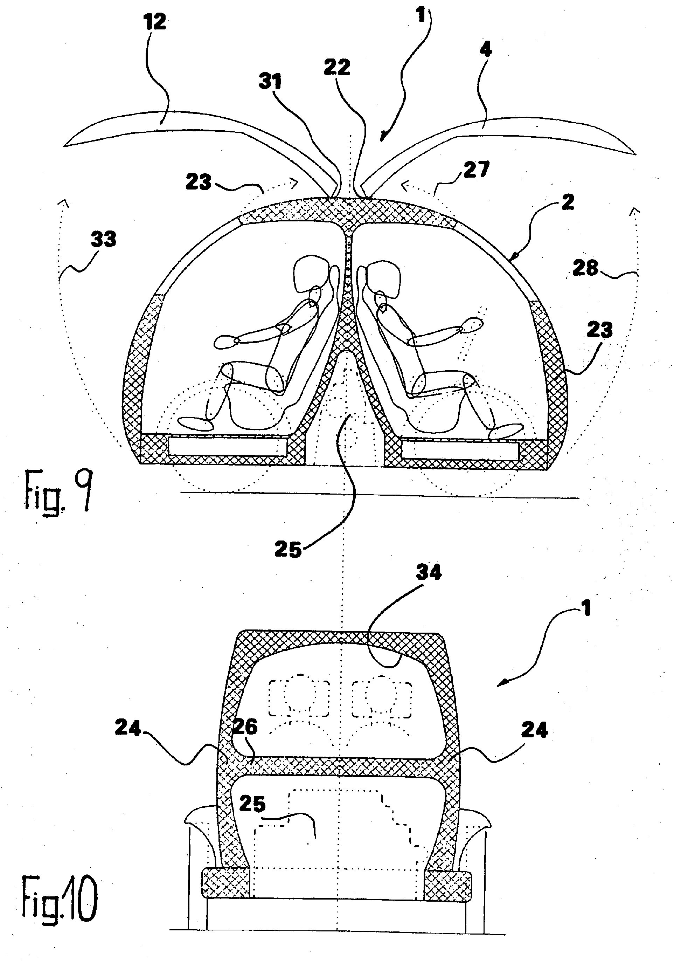

Im Falle der anhand der Figuren 7 bis 10 im Folgenden erläuterten Ausführungsform des Kraftwagens 1 ist, wie sich am besten aus Figur 9 ergibt, der Oberkante der Fronttür 4 eine Schwenkachse 22 zugeordnet. Diese Schwenkachse 22 wird zunächst mit der Fronttür 4, wie sich am besten aus dem Pfeil 27 in Figur 9 ergibt, aus der Frontöffnung der Fahrgastzelle in aufwärtiger Richtung verschoben, bevor dann die Fronttür 4, wie durch den Pfeil 28 in Figur 9 angedeutet, um die in aufwärtiger Richtung verschobene Schwenkachse 22 aufwärts geschwenkt wird. Die Schwenkachse 22 ist mit der Fronttür 4 aus der Frontöffnung der Fahrgastzelle 2 herausschiebbar. Um die herausgeschobene Schwenkachse 22 herum ist die Fronttür 4 aus der Frontöffnung der Fahrgastzelle 2 heraus verschwenkbar, soweit die Frontöffnung der Fahrgastzelle 2 noch durch die Fronttür 4 abgedeckt ist, wenn sich die Fronttür 4 bzw. die Schwenkachse 22 in der in Figur 9 gezeigten, aus der Frontöffnung in aufwärtiger Richtung verschobenen Position befindet. In entsprechender Weise ist die Hecktür 12 der in Figur 9 gezeigten Ausführungsform des Kraftwagens 1 aus der Hecköffnung der Fahrgastzelle 2 heraus in aufwärtiger Richtung verschiebbar, bevor die Hecktür 12 um eine ihr zugeordnete Schwenkachse 31 in aufwärtiger Richtung verschwenkbar ist. Die Schiebebewegung der Hecktür 12 ist in Figur 9 durch den Pfeil 32, die Schwenkbewegung in Figur 9 durch den Pfeil 33 dargestellt. Wie sich am besten aus den Figuren 7 und 8 ergibt, ist die Fahrgastzelle 2 als Sicherheitszelle ausgestaltet, wobei zur Fahrgastzelle 2 sich in Längsrichtung des Kraftwagens 1 erstreckende Seitenteile 24 angeordnet sind. Die Seitenteile 24 sind im dargestellten Ausführungsbeispiel mittels Wabenstrukturen verstärkt ausgebildet. An den beiden Stirnseiten wird mit Hilfe der verstärkten Seitenteile 24 ein steifer Sicherheitsrahmen gebildet, gegen den die Fronttür 4 mit ihrem Randbereich im dargestellten Ausführungsbeispiel formschlüssig anliegt, wenn sie geschlossen ist. In entsprechender Weise ist die Stirnseite am Heck des Kraftwagens 1, ausgestaltet, was auch für die Hecktür 12 gilt.

Sowohl die Fronttür 4 als auch die Hecktür 12 haben in ihrem unteren Abschnitt eine integrierte Knautschzone 23, die bei dem in den Figuren 7 bis 10 gezeigten Ausführungsbeispiel ebenfalls als Wabenstruktur ausgebildet ist.

Wie sich am besten aus einer Zusammenschau der Figuren 9 und 10 ergibt, ist eine Motorgruppe 25 des Kraftwagens 1 in Längsrichtung desselben mittig angeordnet, im dargestellten Ausführungsbeispiel zwischen den beiden Sitzreihen des Kraftwagens 1. Aufgrund der Anordnung der Motorgruppe 25 nahe dem Boden der Fahrgastzelle 2 ergibt sich ein günstiger Schwerpunkt des Kraftwagens 1. Oberhalb der Motorgruppe 25 verläuft in Querrichtung der Fahrgastzelle 2 ein Querträger 26, der quer durch die Fahrgastzelle 2 zwischen den beiden Seitenteilen 24 der Fahrgastzelle 2 sich erstreckt. Auch der Querträger 26 kann als Wabenstruktur ausgeführt sein. In jedem Fall ist der Querträger 26 in die als Sicherheitszelle ausgestaltete Fahrgastzelle 2 integriert. Im oberen Bereich der Fahrgastzelle 2 ist oberhalb des Querträgers 26, wie sich insbesondere aus den Figuren 7, 8 und 10 ergibt, eine Durchbrechung 34 vorgesehen.

## Patentansprüche

1. Kraftwagen, mit einer Fahrgastzelle (2), die seitentürenfrei ausgebildet ist und eine an der Frontseite (3) der Fahrgastzelle (2) angeordnete Fronttür (4) aufweist, die über eine Oberkante (9) einer Frontöffnung der Fahrgastzelle (2) in rückwärtiger Richtung aus der Frontöffnung heraus verschieblich ist, **dadurch gekennzeichnet, dass** die Frontöffnung der Fahrgastzelle (2) von einem steifen Sicherheitsrahmen gebildet ist, dass die Fahrgastzelle (2) als Sicherheitszelle ausgebildet ist, zu der die Fronttür (4) als Bestandteil gehört, und dass der Oberkante der Fronttür (4) eine Schwenkachse (22) zugeordnet ist, die mit der Fronttür (4) aus der Frontöffnung der Fahrgastzelle (2) herausschiebbar ist, bevor die Fronttür (4) aus der Frontöffnung der Fahrgastzelle (2) um diese Schwenkachse (22) verschwenkbar ist.

2. Kraftwagen nach Anspruch 1, dessen Fahrgastzelle (2) im Längsschnitt einen teilkreisförmigen Querschnitt aufweist.

3. Kraftwagen nach Anspruch 1 oder 2, mit einer Lenkvorrichtung (14), die als herkömmliches Lenkrad oder als Joystick ausgebildet ist.

4. Kraftwagen nach einem der Ansprüche 1 bis 3, dessen Lenkvorrichtung (14) an ein Seitenteil der Fahrgastzelle (2) oder an ein zwischen den Vordersitzen der Fahrgastzelle (2) angeordnetes Anschlußteil angeschlossen ist.

5. Kraftwagen nach einem der Ansprüche 1 bis 4, dessen Fronttür (4) eine integrierte Knautschzone (23) aufweist.

6. Kraftwagen nach einem der Ansprüche 1 bis 5, der in Länge und Breite variabel gestaltbar und modulartig z.B als Ein-, Zwei-, Fünf-, Sieben-, Neunsitzer, Minivan, Lieferwagen, Minibus etc. zusammenstellbar ist.

7. Kraftwagen nach Anspruch 5 oder 6, bei dem die in die Fronttür (4) integrierte Knautschzone (23) im unteren Abschnitt der Fronttür (4) und als Wabenstruktur ausgebildet ist.

8. Kraftwagen nach einem der Ansprüche 1 bis 7, bei dem in Längsrichtung der seitentürfreien Fahrgastzelle (2) sich erstreckende Seitenteile (24) der Fahrgastzelle (2) verstärke, vorzugsweise mittels Wabenstrukturen, ausgebildet sind.

9. Kraftwagen nach einem der Ansprüche 1 bis 8, bei dem eine Motorgruppe (25) des Kraftwagens (1) in Längsrichtung. desselben etwa mittig am Bodenbereich der Fahrgastzelle (4) angeordnet ist.

10. Kraftwagen nach einem der Ansprüche 1 bis 9, mit einer Hecktür (12), die in Bezug auf eine in Richtung des Kraftwagens (1) angeordneten Mittelebene der Fahrgastzelle (2) symmetrisch zur Fronttür (4) angeordnet und über eine Oberkante einer Hecköffnung der Fahrgastzelle (2) in vorwärtiger Richtung aus der Hecköffnung heraus verschieblich ist.

11. Kraftwagen nach einem der Ansprüche 1 bis 9, bei dem oberhalb einer in Längsrichtung der Fahrgastzelle (2) etwa mittig angeordneten Motorgruppe (25) des Kraftwagens (1) in der Fahrgastzelle (2) ein Querträger (26) angeordnet ist, der in die als Sicherheitszelle ausgebildete Fahrgastzelle (2) integriert ist.

12. Kraftwagen nach einem der Ansprüche 1 bis 11, bei dem die Sicherheitszelle ausbildende Bauteile der Fahrgastzelle (2) im Querschnitt eine - vorzugsweise in Leichtbauweise ausgestaltete - Wabenstruktur aufweisen.

13. Kraftwagen nach einem der Ansprüche 1 bis 11, bei dem die Sicherheitszelle ausbildende Bauteile der Fahrgastzelle (2) aus geeigneten Leichtwerkstoffen - z.B. aus Aluminium, Kunststoff od.dgl. - hergestellt, insbesondere gegossen sind.

## Claims

1. A motor vehicle with a passenger compartment (2), which is designed side door-free and comprises a front door (4) arranged on the front side (3) of the passenger compartment (2), which can be displaced out of the front opening in rearward direction via an upper edge (9) of a front opening of the passenger compartment (2), **characterized in that** the front opening of the passenger compartment (2) is formed by a rigid safety frame, **in that** the passenger compartment (2) is designed as safety cell, to which the front door (4) belongs as integral part, and **in that** the upper edge of the front door (4) is assigned a pivot axis (22), which can be pushed out of the front opening of the passenger compartment (2) with the front door (4), before the front door (4) can be pivoted out of the front opening of the passenger compartment (2) about said pivot axis (22).

2. The motor vehicle according to Claim 1, whose passenger compartment (2) in longitudinal section has a partially circular cross section.

3. The motor vehicle according to Claim 1 or 2, with a steering device (14) which is designed as conventional steering wheel or as joystick.

4. The motor vehicle according to any one of the Claims 1 to 3, whose steering device (14) is connected to a lateral part of the passenger compartment (2) or to a connecting part arranged between the front seats of the passenger compartment (2).

5. The motor vehicle according to any one of the Claims 1 to 4, whose front door (4) comprises an integrated crumple zone (23).

6. The motor vehicle according to any one of the Claims 1 to 5, which in length and width is variably configurable and can be assembled in a modular manner, e.g. as single, two, five, seven, nine seater, minivan, delivery van, minibus etc.

7. The motor vehicle according to Claim 5 or 6, wherein the crumple zone (23) integrated in the front door (4) is formed in the lower section of the front door (4) and as honeycomb structure.

8. The motor vehicle according to any one of the Claims 1 to 7, wherein lateral parts (24) of the passenger compartment (2) extending in longitudinal direction of the side door-free passenger compartment (2) are designed reinforced, preferentially by means of honeycomb structures.

9. The motor vehicle according to any one of the Claims 1 to 8, wherein a motor assembly (25) of the motor vehicle (1) is arranged in longitudinal direction of the latter approximately in the middle on the floor region of the passenger compartment (4).

10. The motor vehicle according to any one of the Claims 1 to 9, with a rear door (12) which with respect to a centre plane of the passenger compartment (2) arranged in direction of the motor vehicle (1) is arranged symmetrical to the front door (4) and can be pushed out of the rear opening in forward direction via an upper edge of a rear opening of the passenger compartment (2).

11. The motor vehicle according to any one of the Claims 1 to 9, wherein above a motor assembly (25) of the motor vehicle (1) arranged in longitudinal direction of the passenger compartment (2) approximately in the middle a cross member (26) is arranged in the passenger compartment (2), which is integrated in the passenger compartment (2) designed as safety cell.

12. The motor vehicle according to any one of the Claims 1 to 11, wherein the components of the passenger compartment (2) forming the safety cell in cross section have a honeycomb structure, preferentially configured in light-weight construction.

13. The motor vehicle according to any one of the Claims 1 to 11, wherein the components of the passenger compartment (2) forming the safety cell are produced, more preferably cast from suitable light-weight materials - e.g. from aluminium, plastic or the like.

## Revendications

1. Véhicule automobile, avec une cellules passagers (2), qui est constituée sans portes latérales et comporte une porte avant (4) disposée sur la face avant (3) de la cellule passagers (2), qui peut être déplacée en dehors de l'ouverture avant, en direction de l'arrière, au-dessus d'un bord supérieur (9) d'une ouverture avant de la cellule passagers (2) **caractérisé en ce que** l'ouverture avant de la cellules passagers (2) est formée par un cadre de sécurité rigide, **en ce que** la cellule passagers (2) est constituée comme une cellule de sécurité à laquelle appartient la porte avant (4) en tant que composant et **en ce qu'**un axe de pivotement (22) est attribué au bord supérieur de la porte avant (4) qui peut être repoussé avec la porte avant (4) en dehors de l'ouverture avant de la cellule passagers (2), avant que la porte avant (4) puisse être basculée autour de cette axe de pivotement (22) hors de l'ouverture avant de la cellule passagers (2).

2. Véhicule automobile selon la revendication 1 dont la cellule passagers (2) comporte dans la section longitudinale, une section transversale partiellement circulaire.

3. Véhicule automobile selon la revendication 1 ou 2 avec un dispositif de direction (14) qui est constitué comme un volant traditionnel ou comme une manette de commande.

4. Véhicule automobile selon l'une quelconque des revendications 1 à 3 dont le dispositif de direction (14) est raccordé à une partie latérale de la cellule passagers (2) ou à une partie de raccordement disposée entre les sièges avant de la cellule passagers (2).

5. Véhicule automobile selon l'une quelconque des revendications 1 à 4 dont la porte avant (4) comporte une zone de déformation (23) intégrée.

6. Véhicule automobile selon l'une quelconque des revendications 1 à 5 qui peut être assemblé structurable et modulaire, de façon variable, en longueur et en largeur, par exemple comme véhicule à une, deux, cinq, sept, neuf places, minifourgon, fourgon de livraison, minibus, etc.

7. Véhicule automobile selon l'une quelconque des revendications 5 à 6 pour lequel la zone de déformation (23) intégrée dans la porte avant (4) est dans la section inférieure de la porte avant (4) et constituée comme structure alvéolaire .

8. Véhicule automobile selon l'une quelconque des revendications 1 à 7 pour lequel les parties latérales (24) de la cellule passagers (2), s'étendant dans le sens longitudinal de la cellules passagers sans porte latérale (2), sont constituées renforcées, de préférence au moyen de structures alvéolaires.

9. Véhicule automobile selon l'une quelconque des revendications 1 à 8 pour lequel un groupe moteur (25) du véhicule automobile (1) est disposé dans le sens longitudinal de celui-ci, à peu près au centre sur la zone de plancher de la cellule passagers (2).

10. Véhicule automobile selon l'une quelconque des revendications 1 à 9 avec une porte arrière (12) qui est disposée symétriquement à la porte avant (4) par rapport à un plan central de la cellule passagers (2), disposé en direction du véhicule automobile (1) et qui peut être déplacée en dehors de l'ouverture arrière, en direction de l'avant, au-dessus d'un bord supérieur d'une ouverture arrière de la cellule passagers (2).

11. Véhicule automobile selon l'une quelconque des revendications 1 à 9 pour lequel au-dessus d'un groupe moteur (25) du véhicule automobile (1), disposé à peu près au centre dans le sens longitudinal de la cellule passagers (2), une traverse (26) est disposée dans la cellule passagers (2), qui est intégrée dans la cellule passagers (2) constituée comme une cellule de sécurité.

12. Véhicule automobile selon l'une quelconque des revendications 1 à 11 pour lequel les composants de la cellule passagers (2) constituant la cellule de sécurité comportent dans la section transversale, une structure alvéolaire , de préférence configurée en construction légère.

13. Véhicule automobile selon l'une quelconque des revendications 1 à 11 pour lequel les composants de la cellule passagers (2) constituant la cellule de sécurité sont fabriqués en matériaux légers appropriés, par ex.: en aluminium, matière plastique ou matériau analogue, ou sont en particulier moulés.
